**Europäisches Patentamt**

**(19)** **European Patent Office**

**Office européen des brevets**

**(11)** Publication number : **0 361 699 B1**

**(12)** EUROPEAN PATENT SPECIFICATION

**(45)** Date of publication of patent specification :
01.04.92 Bulletin 92/14

**(51)** Int. Cl.⁵ : **B62D 5/06**

**(21)** Application number : **89308878.1**

**(22)** Date of filing : **01.09.89**

**(54) A power assisted vehicle steering system.**

**(30)** Priority : **28.09.88 GB 8822770**

**(43)** Date of publication of application :
**04.04.90 Bulletin 90/14**

**(45)** Publication of the grant of the patent :
**01.04.92 Bulletin 92/14**

**(84)** Designated Contracting States :
**DE ES FR IT SE**

**(56)** References cited :
**EP-A- 0 287 227**
**GB-A- 2 057 374**
**GB-A- 2 119 326**

**(56)** References cited :
**US-A- 4 765 427**
**PATENT ABSTRACTS OF JAPAN, vol. 8, no. 80**
**(M-289)[1517], 12th April 1984; & JP-A-58 224**
**855 (NISSAN JIDOSHA K.K.) 27-12-1983**

**(73)** Proprietor : **TRW CAM GEARS LIMITED**
**Old Church Road**
**Clevedon Avon BS21 6NJ (GB)**

**(72)** Inventor : **Adams, Frederick John**
**"Pelba",27 Princes Road**
**Clevedon Avon (GB)**

**(74)** Representative : **Walters, Frederick James et al**
**Urquhart-Dykes & Lord 91 Wimpole Street**
**London W1M 8AH (GB)**

## Description

### TECHNICAL FIELD & BACKGROUND ART

The present invention relates to a power assisted vehicle steering system of the kind having a steering gear which is adjustable in response to a steering input torque to effect a steering manoeuvre and in which power assistance to the adjustment of the steering gear is provided by an hydraulically actuated servo motor. With such type of gear it is known to direct hydraulic fluid to the servo motor in a sense to assist the steering manoeuvre by valve means which is adjusted in response to the steering input torque. Hydraulic fluid for actuating the servo motor may be derived from a pump driven by an electric motor and in a prior proposal which is the subject of our British Patent Application Publication No. 2,203,394A corresponding to EP-A-0287227 published on 19.10.88 the electrical control system for the pump motor is arranged so that that motor is energised for the pump to supply hydraulic fluid only when a predetermined, albeit exceedingly small, input torque is exceeded. Consequently the pump motor is actuated only when required to effect a steering manoeuvre thereby conserving electrical power in the vehicle and alleviating wastage of hydraulic power so that the hydraulic fluid in the steering system has opportunities to cool between steering manoeuvres. There are exceptional circumstances however when the system as above described is disadvantageous, this is when the ambient temperature is very low and the hydraulic fluid for the servo motor may become extremely viscous. With conventional hydraulic fluids an unacceptable increase in viscosity is likely to occur with an ambient temperature in the order of -30°C (even if special hydraulic fluids intended for use in cold climates are employed it may be found that the steering of the vehicle is still "sluggish" particularly when self centreing). When these cold weather conditions prevail it is expected that many components in the vehicle do not perform satisfactorily and it is normal to leave the vehicle engine running for a period to allow the components to "warm up" before the vehicle is driven. Running the vehicle engine in this way may be of little assistance in improving the condition of the steering system bearing in mind that the system may be remote from the engine or the engine may have to run for an unacceptably long period before the hydraulic fluid of the steering system attains a reasonable working temperature. It is an object of the present invention to provide a power assisted vehicle steering system of the kind previously discussed and by which the aforementioned disadvantages may be alleviated.

### STATEMENT OF INVENTION & ADVANTAGES

According to the present invention there is provided a power assisted vehicle steering system comprising a steering gear adjustable in response to a steering input torque to effect a steering manoeuvre; an hydraulically actuated servo motor for providing power assistance to the adjustment of said gear; valve means adjustable in response to the steering input torque to direct hydraulic fluid to the servo motor in a sense to assist the manoevure, said hydraulic fluid being derived from a pump driven by an electric motor; electrical sensor means responsive to the steering input torque and which acts when a predetermined input torque is exceeded to energise the electric motor for the pump to supply hydraulic fluid, and thermally responsive switch means which acts to energise the electric motor for the pump at a detected temperature which is less than a predetermined temperature.

By the proposal of the present invention the thermally responsive switch means may be set so that when a low predetermined temperature of, say, -20°C is detected the electric motor for the pump is energised irrespective of the fact that no steering input torque is applied to the steering gear. Under these conditions, the pump may be driven continuously to heat the hydraulic fluid in the steering system. When the detected temperature of the hydraulic fluid attains the predetermined temperature then the energisation of the electric motor will be subject to the sole control of the electrical sensor means for the pump to operate merely as required to provide hydraulic fluid to assist in a steering manoeuvre. Consequently the existence of the thermally responsive switch in addition to the electrical sensor means will not adversely affect the system since power assistance will be available provided that fluid pressure from the pump is caused by energisation of the electrical motor in response to actuation of the electrical sensor means or the thermal switch.

The thermally responsive switch will usually be incorporated in the electrical ignition circuit of the vehicle so that if the detected temperature is less than the predetermined temperature, the electric motor for the pump will be energised only when the vehicle ignition is switched on.

The thermal switch means may be responsive to temperature which is detected in the hydraulic fluid of the steering system, which is detected in the electric motor or merely to ambient temperature. Consequently the location of an appropriate temperature sensing component of the thermal switch means is flexible.

The valve means is preferably of the open centre kind having a neutral open-centre condition in which hydraulic fluid can circulate therethrough.

### DRAWING

One embodiment of a power assisted vehicle steering system constructed in accordance with the present invention will now be described, by way of example only, with reference to the accompanying illustrative drawing which diagrammatically illustrates the system applied to a steering gear of the rack and pinion type having an external ram type servo motor.

DETAILED DESCRIPTION OF DRAWING

Many of the components in the illustrated steering system will be readily apparent to those familiar with the art including a rack and pinion type steering gear comprising a rack housing 1 within which is longitudinally displaceable a rack bar having end tie rods 2 which are coupled in conventional manner to a vehicle steering linkage so that displacement of the rack bar effects in a steering manoeuvre. Engaging with the teeth of the rack bar is a pinion rotatably mounted in a pinion housing 3 (which forms part of the rack bar housing) and having a pinion shaft 4 for connection to a steering column. The pinion rotates in response to a steering input torque to longitudinally displace the rack bar. Externally mounted on the rack bar housing 1 is an hydraulically actuated servo motor comprising a double acting piston and cylinder device or ram 5, fluid supply to and from opposed chambers in which is provided by way of conduits 6. The piston of the ram 5 has a rod 7 which is coupled to the rack bar as indicated at 8 so that actuation of the ram can assist in longitudinal displacement of the rack bar in known manner.

Mounted on the housings 1 and 3 is a valve assembly 9 which is intended to control the flow of pressurised fluid and return by way of the conduits 6 to the ram as required to assist in the displacement of the rack bar. Hydraulic fluid under pressure is provided to the valve assembly through a conduit 10 from a pump 11. A fluid return conduit 12 is provided from the valve assembly 9 to the pump. The pump 11 is driven by an electric motor 13 having an electrical control circuit 14 comprising a power source 15 and an electrical control switch 16 conveniently located within or on the pinion housing 3.

For convenience, only a basic form of the hydraulic system has been illustrated, for example there will usually be incorporated in the system a fluid supply reservoir (not shown). The valve assembly 9 is of the open centre/open return type whereby it has a neutral condition in which, with no steering input torque, the opposed chambers of the ram 5 communicate through the valve with the return conduit 12 and the supply conduit 10 also communicates with the conduit 12 so that hydraulic fluid can be displaced freely through the system (for example during self centreing of the steering gear following a steering manoeuvre). Upon the application of a steering input torque to the pinion shaft 4 to effect a steering manoeuvre, the engagement of the pinion with the rack bar and the reaction therefrom causes the pinion to be displaced to a small extent within its housing 3 and in a direction opposite to the longitudinal direction in which the rack bar is driven by rotation of the pinion. The pinion is coupled to a displaceable valve member in the valve assembly 9 and also to the electrical control switch 16 so that its aforementioned displacement serves a double purpose. In response to a predetermined input torque the aforementioned displacement of the pinion firstly closes the switch 16 to energise the motor 13 which drives the pump 11 and provides hydraulic fluid under pressure and secondly, displaces the valve member in the assembly 9 to direct fluid pressure to the appropriate one of the ram chambers and fluid return from the other ram chamber for the servo motor to provide the required assistance to the steering manoeuvre. When the steering input torque is removed (or reduces below the predetermined input torque) the pinion centralises and the valve assembly 9 reverts to its neutral condition so that the switch 16 opens and de-energises the motor 13. By this arrangement it will be appreciated that electrical power is provided to the motor 13 for such period as fluid pressure is required to assist a steering manoeuvre thereby alleviating wastage of energy in the vehicle.

In accordance with the concept of the present invention the electrical control system 14 for the pump motor includes a normally open thermally responsive electrical switch 17 which is connected in parallel with the switch 16. The switch 17 is connected through 18 to a temperature sensing component 19 which, conveniently, senses the temperature of the hydraulic fluid in the system but could be located to sense the temperature of the pump, motor, valve assembly or ram or even ambient temperature. The thermal switch 17 is arranged to close when the sensor 19 detects a temperature less than a predetermined temperature, the latter being for example -25°C. Below such a low temperature the hydraulic fluid is likely to become extremely viscous and thereby render the steering system somewhat "sluggish" in operation. Accordingly when the sensed temperature is below that predetermined, the switch 17 closes to override the switch 16 and continually drive the motor 13 and thereby the pump 11 irrespective of the condition of the switch 16. Accordingly hydraulic fluid will be driven through the system even with no input torque to the pinion shaft 4 and as a result the hydraulic fluid will be heated. If a steering input torque is applied to effect a steering manoeuvre while the thermal switch 17 is closed it will be appreciated that power assistance will be provided from the pump 11 albeit that both switches 16 and 17 will be in a closed condition. When the temperature detected by the sensor 19 attains or exceeds the predetermined temperature, the thermal switch 17 opens so, again, the motor 13 will only be energised spasmodically and as necessary to provide fluid pressure to assist the steering manoevure.

Usually the thermal switch 17 will be wired into the control system 14 through the electrical ignition system (indicated generally at 20) for the vehicle so that even if the sensed temperature is sufficiently low to close the switch 17 the pump motor will not be energised until the vehicle ignition is turned on.

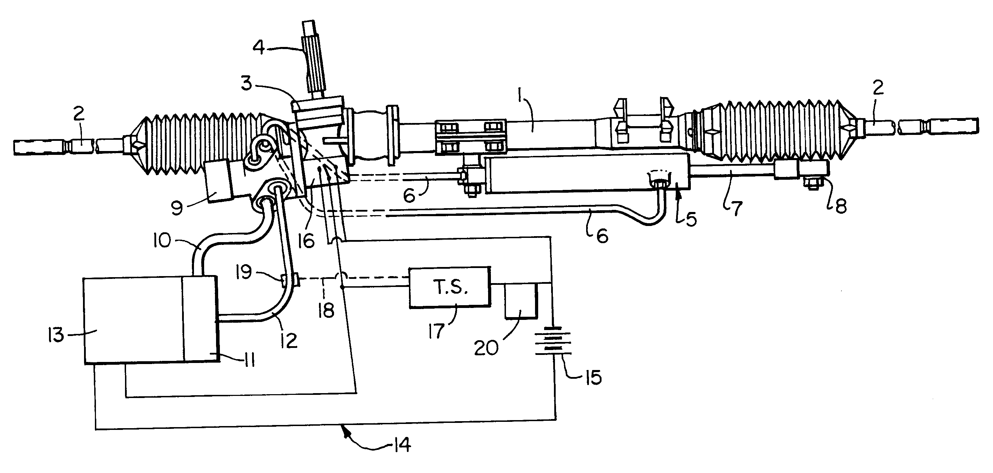

## Claims

1. A power assisted vehicle steering system comprising a steering gear adjustable in response to a steering input torque to effect a steering manoeuvre; an hydraulically actuated servo motor (5) for providing power assistance to the adjustment of said gear; valve means (9) adjustable in response to the steering input torque to direct hydraulic fluid to the servo motor (5) in a sense to assist the manoeuvre, said hydraulic fluid being derived from a pump (11) driven by an electric motor (13); electrical sensor means (16) responsive to the steering input torque and which acts when a predetermined input torque is exceeded to energise the electric motor (13) for the pump to supply hydraulic fluid, and CHARACTERISED BY thermally responsive switch means (17) which acts to energise the electric motor (13) for the pump (11) at a detected temperature which is less than a predetermined temperature.

2. A system as claimed in claim 1 in which the thermally responsive switch means (17) is incorporated in an electrical ignition circuit (20) of the vehicle so that if the detected temperature is less than the predetermined temperature, the electric motor (13) for the pump (11) will be energised only when the vehicle ignition (20) is switched on.

3. A system as claimed in either claim 1 or claim 2 in which the thermally responsive switch means (17) is responsive to a temperature which is detected in the hydraulic fluid for the electric motor (13), for the pump (11), for the valve means (9), for the servo motor (5) or for the ambient temperature.

4. A system as claimed in any one of the preceding claims in which the valve means (9) has a neutral open-centre condition in which hydraulic fluid can circulate therethrough.

5. A system as claimed in any one of the preceding claims in which the thermally responsive switch means (17) is connected in parallel with the electrical sensor means (16).

## Patentansprüche

1. Ein Kraftfahrzeug-Servolenkungssystem mit einem Lenkgetriebe, das in Reaktion auf ein Lenkeingangsdrehmoment einstellbar ist, um ein Lenkmanöver durchzuführen; einem hydraulisch aktivierten Servomotor (5) zur Bereitstellung einer Kraftverstärkung zur Einstellung des genannten Getriebes; einer Ventileinrichtung (9), die in Reaktion auf das Lenkeingangsdrehmoment einstellbar ist, um Hydraulikflüssigkeit zum Servomotor (5) in dem Sinne zu lenken, daß das Manöver unterstützt wird; wobei die Hydraulikflüssigkeit von einer Pumpe (11) abgeleitet wird, die von einem elektrischen Motor (13) betrieben wird; einer elektrischen Sensoreinrichtung (16), die auf das Lenkeingangsdrehmoment anspricht und die arbeitet, wenn ein vorbestimmtes Eingangsdrehmoment überschritten wird, um den elektrischen Motor (13) für die Pumpe zu speisen und Hydraulikflüssigkeit zu liefern, und **gekennzeichnet durch** eine thermisch ausgelöste Schalteinrichtung (13), die arbeitet, um den elektrischen Motor (13) für die Pumpe (11) bei einer gemessenen Temperatur zu speisen, die geringer ist als eine vorgegebene Temperatur.

2. Ein System wie in Anspruch 1 geltend gemacht, in welchem die thermisch ausgelöste Schalteinrichtung (17) in einer elektrischen Zündanlage (20) des Fahrzeugs eingebaut ist, so daß, wenn die gemessene Temperatur geringer ist als die vorgegebene Temperatur, der elektrische Motor (13) für die Pumpe (11) nur gespeist wird, wenn die Fahrzeugzündung (20) eingeschaltet ist.

3. Ein System wie entweder in Anspruch 1 oder Anspruch 2 geltend gemacht, in welchem die thermisch ausgelöste Schalteinrichtung (17) auf eine Temperatur anspricht, die in der Hydraulikflüssigkeit für den elektrischen Motor (13), für die Pumpe (11), für die Ventileinrichtung (9), für den Servomotor (5) oder für die Umgebungstemperatur gemessen wird.

4. Ein System wie in irgendeinem der vorhergehenden Ansprüche geltend gemacht, in welchem die Ventileinrichtung (9) eine neutrale Stellung mit offner Mitte hat, in welcher Hydraulikflüssigkeit hindurchzirkulieren kann.

5. Ein System wie in irgendeinem der vorhergehenden Ansprüche geltend gemacht, in welchem die thermisch ausgelöste Schalteinrichtung (17) parallelgeschaltet ist zu der elektrischen Sensoreinrichtung (16).

## Revendications

1. Système de direction assistée de véhicule comportant un mécanisme de direction pouvant être réglé en réponse à un couple d'entrée de direction pour exécuter une manoeuvre de direction ; un servomoteur (5) actionné hydrauliquement destiné à fournir une assistance par asservissement au réglage dudit mécanisme ; un moyen à valve (9) pouvant être réglé en réponse au couple d'entrée de direction afin de diriger du fluide hydraulique vers le servomoteur (5) dans un sens assistant la manoeuvre, ledit fluide hydraulique étant dérivé d'une pompe (11) entraînée par un moteur électrique (13) ; un moyen à capteur électrique (16) sensible au couple d'entrée de direction et qui agit lorsqu'un couple d'entrée prédéterminé est dépassé afin d'alimenter le moteur électrique (13) pour que la pompe fournisse du fluide hydraulique, CARACTERISE PAR un moyen (17) à commutateur sensible à la chaleur qui agit de façon à alimenter le moteur électrique (13) pour la pompe (11) à une température détectée qui est inférieure à une température prédéterminée.

2. Système selon la revendication 1, dans lequel le moyen (17) à commutateur sensible à la chaleur est incorporé dans un circuit d'allumage électrique (20) du véhicule afin que, si la température détectée est inférieure à la température prédéterminée, le moteur électrique (13) pour la pompe (11) ne soit alimenté que lorsque l'allumage (20) du véhicule est commuté en circuit.

3. Système selon la revendication 1 ou la revendication 2, dans lequel le moyen (17) à commutateur sensible à la chaleur est sensible à une température qui est détectée dans le fluide hydraulique pour le moteur électrique (13), pour la pompe (11), pour le moyen à valve (9), pour le servomoteur (5) ou pour la température ambiante.

4. Système selon l'une quelconque des revendications précédentes, dans lequel le moyen à valve (9) présente un état neutre, à centre ouvert, dans lequel du fluide hydraulique peut circuler à travers lui.

5. Système selon l'une quelconque des revendications précédentes, dans lequel le moyen (17) à commutateur sensible à la chaleur est connecté en parallèle avec le moyen à capteur électrique (16).